# EUROPEAN PATENT APPLICATION

(11) **EP 4 397 398 A1**
(43) Date of publication of application: **10.07.2024**
(21) Application number: 23150493.7
(22) Date of filing: 05.01.2023
(51) Int. Cl.: B01D 69/08, D01D 5/24, D01D 10/04, D01D 10/06, D06B 19/00, D06B 23/06, B01D 24/18, D01D 5/00

(54) **ON-LINE DRYING OF HOLLOW FIBER MEMBRANES**

(71) Applicant: Gambro Lundia AB, 226 43 Lund (SE)
(72) Inventor: Buck, Reinhold, 88422 Alleshausen (DE); Wochner, Arnd, 72359 Dotternhausen (DE); Loeffler, Markus, 72379 Hechingen (DE); Weisser, Jasmin, 72348 Rosenfeld (DE)
(74) Representative: Perchenek, Nils

(57) **Abstract**

The present disclosure relates to devices for the on-line drying of permselective hollow fiber membranes. The present disclosure also relates to a continuous process for drying permselective hollow fiber membranes on-line using said devices.

## Description

### Technical Field

The present disclosure relates to devices for the on-line drying of permselective hollow fiber membranes. The present disclosure also relates to a continuous process for drying permselective hollow fiber membranes on-line using said devices.

### Background of the Invention

The production process of permselective hollow fiber membranes usually involves a step of drying the membranes before they can be transferred into a housing to manufacture a filter. Drying can be effected discontinuously, e.g., by preparing membrane strands or bundles and subsequently drying them in drying chambers or ovens, or continuously, i.e., on-line. The majority of on-line drying processes known in the prior art involve drying the hollow fiber membranes with hot air, e.g., in convection ovens.

WO 2016/102442 A1 discloses a device for continuously drying and tempering hollow fiber membranes comprising a plurality of individually heatable rollers. The axes of the rollers are parallel and lie in a common plane. The device allows for a two-stage drying and tempering treatment of the hollow fiber membranes.

It is an objective of the present disclosure to further improve on the device and the process disclosed in WO 2016/102442 A1.

### Brief description of the drawings

- Figure 1: is a longitudinal-sectional view of an embodiment of the device of the present disclosure;
- Figure 2: is a perspective partial view of the device of Figure 1 including the laterally moveable comb.

### Summary of the Invention

The present disclosure relates to devices for the on-line drying of permselective hollow fiber membranes which are capable of performing a two-stage drying and tempering treatment of the hollow fiber membranes. The devices comprise a plurality of rollers having a hot surface. A laterally moveable comb guiding a plurality of hollow fiber membranes into the online dryer is located at the inlet of the online dryer and periodically oscillates around a zero position to change the track of the hollow fiber membranes on the surfaces of the heated rollers.

The present disclosure also relates to a continuous process for preparing permselective hollow fiber membranes which comprises a two-stage drying and tempering treatment of the hollow fiber membranes in the devices of the present disclosure. The two-stage drying and tempering treatment results in a narrow pore size distribution and high selectivity of the final membranes.

### Detailed Description

The present disclosure provides a device capable of performing a continuous two-stage drying and tempering treatment of a plurality of permselective hollow fiber membranes.

The device for continuously drying and tempering a plurality of hollow fiber membranes 4 comprises a plurality of rollers 5 disposed within a housing 1. The housing 1 has an inlet 2 and an outlet 3 for the plurality of hollow fiber membranes 4 and an exhaust 7. A laterally moveable comb 10 guiding the plurality of hollow fiber membranes 4 into the device is located outside the housing 1 at the inlet 2 of the device. The comb 10 is configured to periodically oscillate around a zero position in a direction parallel to the axes of the plurality of rollers 5 and change the track of the plurality of hollow fiber membranes 4 on the surface of the heated rollers 5. In some embodiments, the comb 10 is configured to oscillate around the zero position with an amplitude in the range of from 1 mm to 20 mm, e.g., from 3 mm to 5 mm, or from 12 mm to 18 mm. In the context of the present disclosure, the term amplitude denotes the maximum deflection from the zero position. In some embodiments, the comb 10 is configured to oscillate with a speed in the range of from 10 mm/min to 100 mm/min, e.g., from 30 mm/min to 40 mm/min.

The rollers 5 are configured to heat the plurality of hollow fiber membranes 4. The plurality of hollow fiber membranes 4 are passed over the outer surface of the rollers 5, contacting the hot surface and being heated in the process. The outer surface of each roller 5 of the plurality of rollers 5 is heatable individually. In some embodiments, the outer surface of each roller 5 is configured to be heatable to a temperature in the range of from 150°C to 300°C. The temperature of each roller 5 is controlled individually. Heating can be performed by various methods. For instance, the outer surface of the roller 5 can be heated electrically, i.e. by resistance heating or inductive heating, or it can be heated by radiation heating either from the inside of the roller 5 or from the outside of the roller 5, or both.

Each roller 5 is individually driven by a drive 6. The drive 6 usually will be a motor. The speed of each roller 5 is regulated individually. In one embodiment, each roller 5 is configured to rotate at a circumferential speed in the range of from 30 to 100 m/min, e.g., 45 to 75 m/min.

The rollers 5 are positioned within the housing 1 such that the axes of all rollers 5 are parallel and all axes lie in a single common plane. In one embodiment, the number of rollers 5 is 2 to 20, e.g., 5 to 10, for instance, 8 to 10. In one embodiment, the gap a between the first two rollers 5 downstream of the inlet 2 is in the range of 0.2 to 8 mm, for instance, 1 to 7 mm, e.g., 3 to 5 mm. In one embodiment, all rollers 5 in the device have the same diameter D. In one embodiment of the device, the diameter D is in the range of from 200 to 300 mm.

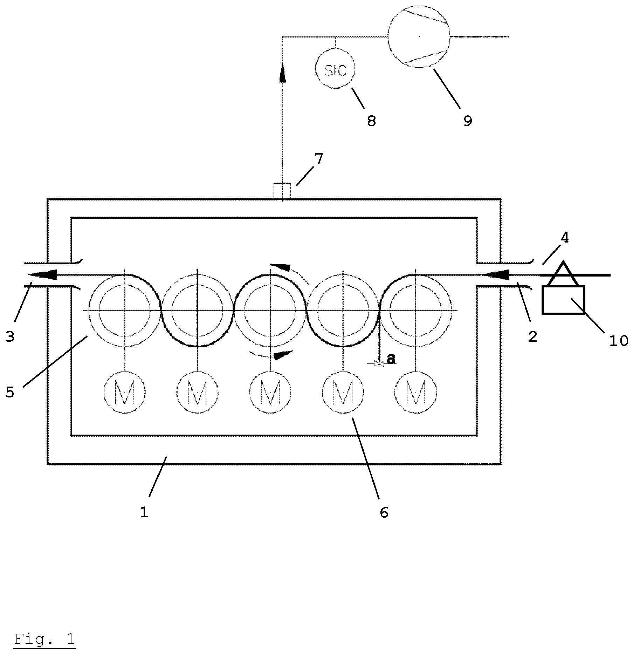

On their way through the device from the inlet 2 to the outlet 3, the plurality of hollow fiber membranes 4 pass over the heated surfaces of the rollers 5 as shown in Figure 1. For a device with rollers of equal size, the length of each individual hollow fiber membrane of the plurality of hollow fiber membranes 4 in contact with the heated surface of the rollers 5 (the "contact length") approximately is (N-1)*n*D, wherein N is the number of rollers 5 in the device, and D is the Diameter of a roller 5. In one embodiment of the device, the contact length is at least 1 m. In other embodiments, the contact length is at least 2 m. In yet another embodiment, the contact length is at least 6 m.

In one embodiment of the device, every other roller 5 of the plurality of rollers 5 is configured to be moveable to a position wherein its axis is outside the plane formed by the axes of the two adjacent rollers 5.

The housing 1 features an exhaust 7, which is connected to a fan 9. During operation of the device, the fan 9 removes water vapor generated by evaporating water from the hollow fiber membranes 4 from housing 1, thereby supporting the drying process. The throughput of the fan 9 is controlled by a controller 8. In one embodiment, the fan 9 is configured to have a throughput in the range of from 200 to 400 m³ gas per hour.

In one embodiment of the device, the hosing 1 is configured to be separated into two compartments, each compartment comprising a part of the total number of rollers 5. In an illustrative example of the device, the total number of rollers is 10; the first compartment downstream the inlet 2 comprising 4 rollers 5 and the second compartment comprising 6 rollers 5.

An illustrative embodiment of a device having five rollers 5 is shown in Fig. 1. The device comprises a housing 1 having an inlet 2 and an outlet 3 for hollow fiber membranes 4. Five rollers 5 are disposed within the housing 1. Each roller 5 is driven individually by a motor 6. Fig. 1 shows the device during treatment of a plurality of hollow fiber membranes 4 (in "working position"). The rollers 5 are positioned within the housing 1 such that their centers are aligned. The minimum distance a between the first two rollers 5 is also shown. As illustrated by Fig. 1, the plurality of hollow fiber membranes 4 enter the device through inlet 2, pass over the surface of rollers 5 and leave the device through outlet 3. The housing 1 features an exhaust 7, which is connected to a fan 9. The throughput of the fan 9 is controlled by controller 8. In one embodiment of the device, the fan is configured to remove a gas volume in the range of from 200 m³ per hour to 400 m³ per hour from the housing 1.

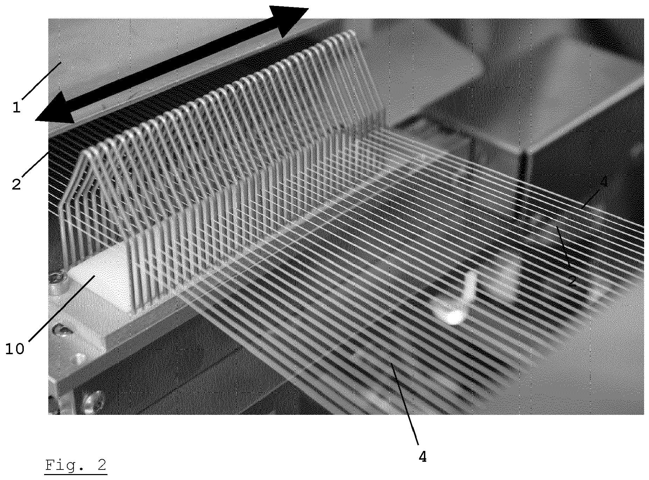

As shown in Figs. 1 and 2, the plurality of hollow fiber membranes 4 is guided into the inlet 2 of the device through gaps of laterally moveable comb 10. Due to the lateral oscillation of the comb 10, the track of the plurality of hollow fiber membranes 4 on the heated rollers 5 is continuously shifted over time. This improves the heat transfer from the heated rollers to the plurality of hollow fiber membranes 4 to be dried by the device.

In the device disclosed in WO 2016/102442 A1, the track of the plurality of hollow fiber membranes 4 on the heated rollers 5 is fixed, and the plurality of hollow fiber membranes 4 always contact the same area of the heated rollers 5. The contacted area cools down and heat transfer is reduced. Additionally, an insulating layer of polymer deposited from the hollow fiber membranes builds up on the surface of the heated rollers 5 over time, which also decreases heat transfer from the heated rollers 5 to the plurality of hollow fiber membranes 4. This effect has to be compensated for by increasing the temperature of the heated rollers 5. The oscillating displacement of the track of the plurality of hollow fiber membranes 4 on the heated rollers 5 with the motor-driven comb 10 achieves improved utilization of the entire surface of the heated rollers 5 and thus heat transfer remains constant over time. As a result, collapse of hollow fibers occurs less often and savings in heating energy are achieved, as the overall temperature level of the heated rollers 5 is lower and heating power can be reduced. Less maintenance of the device is required, as the formation of an insulating layer on the surface of the heated rollers 5 is delayed and removal of the deposits from the surface of the heated rollers 5, e.g., by grinding, is needed less frequently.

The laterally moveable comb 10 is located outside the housing 1 of the device, near the inlet 2, and the orientation of the comb, i.e., its longitudinal axis, is parallel to the axes of the plurality of rollers 5, so that the plurality of hollow fiber membranes 4 to be dried pass through the gaps of the comb 10, i.e., between the teeth of the comb 10. When the comb 10 moves in a lateral direction, the plurality of hollow fiber membranes 4 is also moved into the same direction by the teeth of the comb 10.

The laterally moveable comb 10 is equipped with a movement unit that periodically oscillates the comb 10 around a zero position in a lateral direction, i.e., perpendicular to the direction of movement of the plurality of hollow fiber membranes 4 through the device, and thus in a direction which is parallel to the axes of the heated rollers 5 in the device. The movement unit usually will be driven by a motor. To generate the oscillating movement, linear actuators can be used, such as a rack and pinion.

The movement unit allows for adjusting the amplitude and the speed of the oscillation, so that the amplitude of the oscillation of the comb 10 and the speed of its movement can be adjusted as required. In some embodiments, the movement unit is configured to laterally oscillate the comb around a zero position with an amplitude in the range of from 1 mm to 20 mm, e.g., from 3 mm to 5 mm, or from 12 mm to 18 mm. In some embodiments, the movement unit is configured to move the comb 10 with a speed in the range of from 10 mm/min to 100 mm/min, e.g., from 30 mm/min to 40 mm/min.

The present disclosure also provides a continuous process for preparing permselective hollow fiber membranes. The process comprises subjecting a plurality of hollow fiber membranes 4 to a two-stage drying and tempering treatment in the device of the present disclosure.

In some embodiments of the process, the two-stage drying and tempering treatment comprises drying the plurality of hollow fiber membranes 4 by applying a temperature in the range of from 210 to 280°C, e.g., from 220 to 260°C, to the outer surfaces of the plurality of hollow fiber membranes for a time in the range of from 1 to 4 seconds, e.g., from 2 to 3 seconds; and subsequently tempering the plurality of hollow fiber membranes 4 by applying a temperature in the range of from 180 to 200°C, to the outer surfaces of the plurality of hollow fiber membranes for a time in the range of from 2 to 5 seconds, e.g., from 3 to 4 seconds.

The two-stage drying and tempering treatment provides for adequate evaporation of water and a defined shrinkage of pores. In one embodiment of the process, drying and tempering are effected by contacting the hollow fiber membrane with hot surfaces (e.g., heated rollers) having a temperature in the range of from 180 to 280°C.

In some embodiments of the process, the comb 10 guides the plurality of hollow fiber membranes 4 into the inlet 2 of the device and periodically changes the track of the plurality of hollow fiber membranes 4 on the outer surfaces of the plurality of rollers 5 by oscillating around a zero position in a direction perpendicular to the direction of movement of the plurality of hollow fiber membranes 4 through the device. The oscillation of the comb 10 has an amplitude in the range of from 1 mm to 20 mm, e.g., from 3 mm to 5 mm, or from 12 mm to 18 mm. In some embodiments of the process, the comb 10 moves at a speed in the range of from 10 mm/min to 100 mm/min, e.g., from 30 mm/min to 40 mm/min.

In some embodiments, the process of the present disclosure comprises the steps of continuously
a) extruding a polymer solution comprising
   i. at least one polysulfone, polyethersulfone (PES), or polyarylethersulfone (PAES), optionally in combination with polyamide (PA);
   ii. at least one polyvinylpyrrolidone (PVP); and
   iii. at least one solvent;
   through an outer ring slit of a nozzle with two concentric openings into a precipitation bath; simultaneously
b) extruding a center fluid through the inner opening of the nozzle;
c) washing the hollow fiber membrane obtained;
d) subjecting the hollow fiber membrane to the two-stage drying and tempering treatment in the device of the present disclosure.

The polymer solution which is used in step a) ("the spinning solution") comprises at least one polysulfone, polyethersulfone (PES), or polyarylethersulfone (PAES), optionally in combination with polyamide (PA); and at least one polyvinylpyrrolidone (PVP). In one embodiment, a polyvinylpyrrolidone which consists of a low molecular weight component having a molecular weight of below 100 kDa and a high molecular weight component having a molecular weight of 100 kDa or more is used for preparing the membrane.

An example of a suitable polyethersulfone is a polymer having the general formula -[O-Ph-SO₂-Ph-]ₙ-, a weight average molecular weight of about 60,000 to 65,000 Da, preferably 63,000 to 65,000 Da, and an Mw/Mn of about 1.5 to 1.8.

In one embodiment of the process, the polymer solution comprises from 12 to 16 wt%, related to the total weight of the solution, of polyethersulfone and from 3 to 12 wt%, e.g. 5 to 8 wt%, related to the total weight of the solution, of PVP, wherein said PVP consists of 3 to 8 wt%, e.g. 4 to 6 wt%, related to the total weight of the solution, of a low molecular weight (< 100 kDa) PVP component and 0 to 4 wt%, e.g. 1 to 3 wt%, related to the total weight of the solution, of a high molecular weight (≥ 100 kDa) PVP component. In one embodiment, the total PVP contained in the spinning solution consists of from 22 to 34 wt%, e.g., from 25 to 30 wt% of a high molecular weight (≥ 100 kDa) component and from 66 to 78 wt%, e.g., from 70 to 75 wt% of a low molecular weight (< 100 kDa) component. Examples for high and low molecular weight PVP are, for example, PVP K85/K90 and PVP K30, respectively.

In a particular embodiment, the polymer solution further comprises 66-81 wt% of solvent, related to the total weight of the solution, and 0-10 wt%, e.g. 0-5 wt%, related to the total weight of the solution, of suitable additives. Suitable additives are, for example, chosen form the group consisting of water, glycerol, and other alcohols. In one embodiment, water is present in the spinning solution in an amount of from 0 to 8 wt%, e.g., in an amount of from 2 to 6 wt%, related to the total weight of the solution.

In one embodiment, the solvent used in the process is chosen from the group consisting of N-methylpyrrolidone (NMP), N-ethylpyrrolidone, N-octylpyrrolidone, dimethylacetamide (DMAC), dimethylsulfoxide (DMSO), dimethylformamide (DMF), butyrolactone and mixtures of said solvents. In a particular embodiment, NMP is used as the solvent.

The dynamic viscosity of the polymer solution, measured according to DIN EN ISO 1628-1 at 22°C, usually is in the range of from 3,000 to 15,000 mPa·s, e.g., from 4,000 to 9,000 mPa·s, or even 4,900 to 5,900 mPa·s.

The center fluid or bore liquid which is used in step b) of the process of the present disclosure comprises at least one of the above-mentioned solvents and a precipitation medium chosen from the group of water, glycerol and other alcohols.

In certain embodiments, the center fluid additionally comprises a further additive to modify the surface of the membrane in order to further increase the performance of the membrane. In one embodiment of the invention, the amount of the additive in the center fluid is from 0.02 to 2 wt%, for example from 0.05 to 0.5 wt%, or from 0.05 to 0.25 wt%, related to the total weight of the center fluid.

Examples of suitable additives include hyaluronic acid and zwitterionic polymers as well as copolymers of a vinyl polymerizable monomer having a zwitterion in the molecule and another vinyl polymerizable monomer. Examples of zwitterionic (co)polymers include phosphobetains, sulfobetains, and carboxybetains.

The center fluid generally comprises 40-100 wt% precipitation medium and 0-60 wt% of solvent. In one embodiment of the process, the center fluid comprises 44-69 wt% precipitation medium and 31-56 wt% of solvent. In a particular embodiment, the center fluid comprises 49-63 wt% of water and 37-51 wt% of NMP. In another embodiment, the center fluid comprises 53-56 wt% of water and 44-47 wt% of NMP.

In one embodiment of the process, the polymer solution coming out through the outer slit opening of the spinneret is guided through a spinning shaft with controlled atmosphere. In one embodiment of the process, the spinning shaft is held at a temperature within the range of from 2 to 90°C, e.g., within the range of from 25 to 70°C, or from 30 to 60°C.

In one embodiment, the precipitating hollow fiber is exposed to a humid steam/air mixture comprising a solvent in a content of from 0 to 10 wt%, for instance, from 0 to 5 wt%, or from 0 to 3 wt%, related to the water content. The temperature of the humid steam/air mixture is at least 15°C, preferably at least 30°C, and at most 75°C, e.g. not higher than 62°C. Further, the relative humidity in the humid steam/air mixture is from 60 to 100%.

The effect of the solvent in the temperature-controlled steam atmosphere is to control the speed of precipitation of the fibers. When less solvent is employed, the outer surface will obtain a denser surface, and when more solvent is used, the outer surface will have a more open structure. By controlling the amount of solvent within the temperature-controlled steam atmosphere surrounding the precipitating membrane, the amount and size of the pores on the outer surface of the membrane can be modified and controlled.

In one embodiment of the process of the present disclosure, the temperature of the spinneret is 50-70°C, e.g., 55-61°C, the temperature of the spinning shaft is 25-65°C, for instance, 50-60°C. The distance between the opening of the nozzle and the precipitation bath is from 30 to 110 cm, for instance, 45 to 55 cm. The precipitation bath has a temperature of 10-80°C, e.g. 20-40°C. In one embodiment, the spinning velocity is in the range of 15-100 m/min, for instance, 25-55 m/min.

In one embodiment of the invention, the precipitation bath comprises from 85 to 100 wt% of water and from 0 to 15 wt% of solvent, e.g., NMP. In another embodiment, the precipitation bath comprises from 90 to 100 wt% water and from 0 to 10 wt% NMP.

The hollow fiber membrane obtained by steps a) and b) is subsequently washed to remove waste components (step c). In one embodiment of the process, the hollow fiber membrane is passed through at least one water bath at a temperature in the range of from 70 to 90°C. In another embodiment, the membrane is passed through two water baths. In still another embodiment, the membrane is passed through five water baths. In certain embodiments of the process, the individual water baths have different temperatures. For instance, each water bath may have a higher temperature than the preceding water bath.

The membrane then is subjected to a two-stage drying and tempering treatment (step d) which comprises drying said membrane by applying a temperature in the range of from 210 to 280°C, e.g., from 220 to 260°C, to the outer surface of the membrane for a time in the range of from 1 to 4 seconds, e.g., from 2 to 3 seconds; and subsequently tempering said membrane by applying a temperature in the range of from 180 to 200°C to the outer surface of the membrane for a time in the range of from 2 to 5 seconds, e.g., from 3 to 4 seconds.

The hollow fiber membrane optionally is sterilized after dying. Suitable sterilization methods include treatment with steam, ethylene oxide, or radiation. In one embodiment of the process, the hollow fiber membrane is steam-sterilized at temperatures of at least 121°C for at least 21 minutes.

In one embodiment, the membrane obtained by the process of the present disclosure comprises 80-99 wt% of polysulfone, polyethersulfone (PES), or polyarylethersulfone (PAES), optionally in combination with polyamide (PA); and 1-20 wt% of polyvinylpyrrolidone (PVP).

In one embodiment, the PVP comprised in the permselective hollow fiber membrane consists of a high (≥ 100 kDa) and a low (< 100 kDa) molecular weight component and comprises 10-45 wt%, based on the total weight of PVP in the membrane, of a high molecular weight component, and 55-90 wt%, based on the total weight of PVP in the membrane, of a low molecular weight component.

In one embodiment, the hollow fiber membrane obtained by the process of the present disclosure has an inner diameter of from 180 to 250 um. In another embodiment, the inner diameter is 185 to 195 um. In still another embodiment, the inner diameter is 210 to 220 um.

The wall thickness of the hollow fiber membrane usually is in the range of from 20 to 55 um. In one embodiment, the wall thickness is 33 to 37 um. In another embodiment, the wall thickness is 38 to 42 um. In still another embodiment, the wall thickness is 43 to 47 um. In yet another embodiment, the wall thickness is 48 to 52 um.

The hollow fiber membrane obtained by the process of the present disclosure can have a symmetric wall structure or an asymmetric wall structure. In one embodiment, the membrane wall has a symmetric sponge structure. In another embodiment, the membrane wall has an asymmetric sponge structure. In yet another embodiment of the process, the membrane wall has an asymmetric wall structure and comprises a layer having a finger structure, i.e., featuring macrovoids having a size of more than 5 µm.

It will be understood that the features mentioned above and those described hereinafter can be used not only in the combination specified but also in other combinations or on their own, without departing from the scope of the present invention.

The present invention will now be described in more detail in the examples below. The examples are not intended to limit the scope of the present invention, but are merely an illustration of particular embodiments of the invention.

### Examples

A polymer solution was prepared by dissolving polyethersulfone (Ultrason^{®} 6020, BASF Aktiengesellschaft) and polyvinylpyrrolidone (K30 and K85, BASF Aktiengesellschaft) and distilled water in N-methylpyrrolidone (NMP). The weight fraction of the different components in the polymer spinning solution was: PES:PVP K85:PVP K30:H₂O:NMP = 13.6:2.6:5:75.6. The polymer solution had a dynamic viscosity of 4,600 mPa·s. The dynamic viscosity η of the polymer solution was determined according to DIN ISO 1628-1 at a temperature of 22°C using a capillary viscosimeter (ViscoSystem^{®} AVS 370, Schott-Geräte GmbH, Mainz, Germany).

To prepare the solution, NMP and water were first filled into a 30 L container with finger-paddle agitator. The PVP was added to the NMP and stirred at 50°C until a homogeneous clear solution was obtained. Finally, the polyethersulfone was added. The mixture was stirred at 50°C until a clear highly viscous solution was obtained. The warm solution was cooled to 20°C and degassed for 1-2 hours at 50 mmHg. The highly viscous polymer solution was transferred to a stainless steel container.

A bore liquid was prepared by mixing distilled water and N-methylpyrrolidone (NMP). The weight fraction of the two components in the center fluid was: H₂O:NMP = 53 wt%:47 wt%.

The preparation of the bore liquid was carried out as follows:
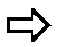 Distilled water was filled into a stainless steel container; NMP was added and the mixture was stirred for approximately 1 min;
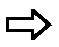 The clear mixture was filtered into a second stainless steel container and degassed at 50 mmHg.

Hollow fiber membranes were formed by heating the polymer solution to 50°C and passing the solution as well as the bore liquid through a spinning die. The temperature of the die was 54°C and the temperature of the spinning shaft was 52°C. The hollow fiber membranes were formed at a spinning speed of 50 m/min. The liquid capillaries leaving the die were passed into a water bath (ambient temperature). The distance between the die and the precipitation bath was 100 cm. The hollow fiber membranes formed were guided through 5 different water baths.

After leaving the fifth water bath, the hollow fiber membranes were fed to an online dryer having two compartments with heated rollers, the first compartment comprising 4 heated rollers and the second compartment comprising 6 heated rollers.

The hollow fiber membranes were dried in the first compartment at a temperature in the range of from 220 to 280°C (roller 2: 245°C, roller 3: 230°C) and tempered in the second compartment at a temperature in the range of from 180 to 190°C (roller 6: 190°C, roller 7: 180°C). Residence time in the first compartment was 2.4 seconds, residence time in the second compartment was 3.2 seconds.

The dry hollow fiber membranes had an inner diameter of 215 pm, a wall thickness of 50 µm and a fully asymmetric membrane structure. The active separation layer of the hollow fiber membranes was at the inner side. The active separation layer is defined as the layer with the smallest pores.

### Example 1

The hollow fiber membranes were guided into the inlet of the online dryer through a comb oscillating in lateral direction. The oscillation had an amplitude of ±3.5 mm, and the speed of the comb movement was 35 mm/min.

The temperatures of the individual rollers and the heating power supplied to each roller were continuously monitored over a period of 10 days.

Within the first 4 days, heating power supplied to roller 2 decreased by 2.8% and then remained within a constant range. No overall decrease in heating power supplied to roller 3 was observed during the 10-day period.

It is hypothesized that the formation of an insulating layer on the surface of the rollers reduces the heat flow from the roller surface to the hollow fiber membranes. As less heat is emitted from the roller, less heating power is required to maintain the roller at a constant temperature.

Within the first 6 days, heating power supplied to roller 6 increased by 7% and then remained within a constant range. Heating power supplied to roller 7 increased by 7.9% within the first 6 days and then remained within a constant range.

It is hypothesized that when less heat is transferred to the hollow fiber membranes from the rollers in the first compartment of the online dryer, larger quantities of water remain in the hollow fiber membranes leaving the first compartment and have to be evaporated by the rollers in the second compartment of the online dryer. Larger amounts of heat need to be transferred to the hollow fiber membranes from the rollers in the second compartment, requiring increased heating power.

### Comparative Example 1

Example 1 was repeated with a stationary comb, i.e., without oscillating the comb in lateral direction. The temperatures of the individual rollers and the heating power supplied to each roller were continuously monitored over a period of 5 days.

Within the first day, heating power supplied to roller 2 decreased by 2.7% and then remained within a constant range. Heating power supplied to roller 3 decreased by 2.6% within the first day and then remained within a constant range.

Within the first day, heating power supplied to roller 6 increased by 7.1% and then remained within a constant range. Heating power supplied to roller 7 increased by 8.6% within the first day and then remained within a constant range.

The comparison of the data indicates that efficiency of the two-stage drying and tempering treatment is substantially increased by the oscillating comb. The formation of insulating deposits on the surfaces of the rollers in the first compartment is significantly reduced (by a factor of 4-6), so that heat transfer is more efficient in the first stages of the treatment, and heating energy can be saved in the tempering stage.

## Claims

1. A device for continuously drying and tempering a plurality of hollow fiber membranes (4), the device comprising a plurality of rollers (5) disposed within a housing (1), the housing (1) having an inlet (2) and an outlet (3) for the hollow fiber membranes (4) and an exhaust (7), wherein the rollers (5) are configured to heat the hollow fiber membranes (4); the outer surface of each roller (5) of the plurality of rollers (5) being individually heatable and each roller (5) being individually driven by a drive (6), and wherein the rollers (5) are positioned within the housing (1) such that the axes of all rollers (5) are parallel and all axes lie in a single common plane, **characterized in that** the device comprises a comb (10) located outside the housing (1) at the inlet (2) of the device, the comb (10) being configured to guide the plurality of hollow fiber membranes (4) into the device and to periodically oscillate around a zero position in a direction parallel to the axes of the plurality of rollers (5) and change the track of the plurality of hollow fiber membranes (4) on the outer surfaces of the plurality of rollers (5).

2. The device of claim 1, wherein the comb (10) is configured to oscillate around the zero position with an amplitude in the range of from 1 mm to 20 mm.

3. The device of claim 1 or 2, wherein the comb (10) is configured to oscillate with a speed in the range of from 10 mm/min to 100 mm/min.

4. The device of any one of claims 1 to 3, wherein the comb (10) is equipped with a movement unit configured to periodically oscillate the comb (10) around a zero position in a direction parallel to the axes of the plurality of rollers (5) in the housing (1).

5. The device of claim 4, wherein the movement unit allows for adjusting the amplitude and the speed of the oscillation.

6. The device of any one of claims 1 to 5, wherein the surface of each roller (5) is configured to be heatable to a temperature in the range of from 150°C to 300°C.

7. The device of any one of claims 1 to 6, wherein each roller (5) is configured to rotate at a circumferential speed in the range of from 30 to 100 m/min.

8. The device of any one of claims 1 to 7, wherein the width of the gap (a) between the first two rollers (5) downstream of the inlet (2) is in the range of 0.2 to 8 mm.

9. The device of any one of claims 1 to 8, wherein the number of rollers (5) is 2 to 20.

10. The device of any one of claims 1 to 9, wherein the exhaust (7) is connected to a fan (9) which is configured to remove a gas volume of 200 to 400 m³ per hour from the housing (1).

11. The device of any one of claims 1 to 10, wherein the number of rollers is at least 3; and every other roller (5) of the plurality of rollers (5) is configured to be moveable to a position wherein its axis is outside the plane formed by the axes of the two adjacent rollers (5).

12. A continuous process for preparing permselective hollow fiber membranes comprising subjecting a plurality of hollow fiber membranes (4) to a two-stage drying and tempering treatment in the device of any one of claims 1 to 11.

13. The process of claim 12, wherein the two-stage drying and tempering treatment comprises drying the plurality of hollow fiber membranes (4) by applying a temperature in the range of from 210 to 280°C to the outer surfaces of the plurality of hollow fiber membranes (4) for a time in the range of from 1 to 4 seconds; and subsequently tempering the plurality of hollow fiber membranes (4) by applying a temperature in the range of from 180 to 200°C to the outer surfaces of plurality of hollow fiber membranes (4) for a time in the range of from 2 to 5 seconds.

14. The process of claim 12 or 13, wherein the comb (10) guides the plurality of hollow fiber membranes (4) into the inlet (2) of the device and periodically changes the track of the plurality of hollow fiber membranes (4) on the outer surfaces of the plurality of rollers (5) by oscillating around a zero position in a direction perpendicular to the direction of movement of the plurality of hollow fiber membranes (4) through the device, the oscillation of the comb (10) having an amplitude in the range of from 1 mm to 20 mm.

15. The process of claim 14, wherein the comb (10) moves at a speed in the range of from 10 mm/min to 100 mm/min.
